Europäisches Patentamt

European Patent Office

Office européen des brevets

(11) Publication number: **0 357 120 B1**

# EUROPEAN PATENT SPECIFICATION

(45) Date of publication of patent specification: **21.07.93**  (51) Int. Cl.5: **C08J 3/12**, C08L 21/00, C08J 3/20

(21) Application number: **89202069.4**

(22) Date of filing: **09.08.89**

(54) **Process for the preparation of free-flowing rubber particles.**

(30) Priority: **09.08.88 GB 8818875**

(43) Date of publication of application:
**07.03.90 Bulletin 90/10**

(45) Publication of the grant of the patent:
**21.07.93 Bulletin 93/29**

(84) Designated Contracting States:
**BE DE FR GB IT NL**

(56) References cited:
FR-A- 2 304 638
GB-A- 1 305 380
US-A- 3 345 324
US-A- 4 375 497

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Heezen, Roelof
Badhuisweg 3
NL-1031 CM Amsterdam(NL)**
Inventor: **Hoving, Johan Mettinus
Badhuisweg 3
NL-1031 CM Amsterdam(NL)**

Rank Xerox (UK) Business Services
(3.10/3.6/3.3.1)

**Description**

The present invention relates to a process for the preparation of free-flowing, filler-containing rubber particles. More in particular the invention relates to a process for the preparation of such particles via coagulation of a rubber latex.

Although the bulk of synthetic rubbers produced is available in the form of bales, there appears to be a growing demand for rubbers which are produced in the form of free-flowing particles, e.g. powdered rubbers. Such powdered rubbers have the advantage in that they are pourable and easier to handle, which characteristics offer new possibilities in transportation as well as being advantageous in certain rubber compounding operations, such as in continuous compounding operations.

A prerequisite for such powdered rubbers is that the particles are tack-free and storage-stable. For most types of powdered rubbers such a combination of properties can only be obtained when said particles also contain an inert filler and are moreover submitted to a posttreatment to reduce surface tack.

Methods for the preparation of such rubber particles are known and have been described e.g. in US Patents 4,374,941 and 4,375,497, and comprise mixing an aqueous carbon black dispersion with a rubber latex, coagulating said mixture with a single- or two-step coagulating process, which is followed by partioning the coagulated suspension with a coating resin, which coating resin comprises a mixture of a styrene/butadiene resin and a styrene/α-methylstyrene or a polystyrene resin, containing a mixture of added surfactants, and which coating resin is coagulated at a temperature in the range of from 70-90 °C.

Although the carbon black-containing rubber particles thus prepared are claimed to be tack-free and pourable, it is felt that the process via which these rubber particles are prepared, is unattractive in view of the many steps involved. Furthermore, it is also conceivable that the presence of relatively high concentrations of surfactants required for the particle coating operation, in addition to the surfactants introduced via the rubber latex and the carbon black dispersion, may not always be acceptable. Hence it can be concluded that there is still need for further improvement in the preparation of tack-free, pourable, filler-containing rubber particles.

The problem underlying the present invention is developing a process for the preparation of tack-free, pourable, filler-containing rubber particles, which does not have one or more of the disadvantages mentioned hereinbefore.

As a result of continuing and extensive research and experimentation, there was surprisingly found that it is possible to prepare rubber particles as hereinbefore described via a relatively simple process, wherein intermediately formed filler-containing rubber particles are given a posttreatment, which does not require the presence of further surfactants or of relatively large amounts of reagents.

The invention provides therefore a process for the preparation of tack-free, free-flowing, filler-containing, rubber particles which comprises

a) the addition of a rubber latex and a solid filler to an agitated aqueous coagulating medium having a pH in the range of from 0-4.5, and at such a rate as to provide an aqueous slurry of filler-containing, rubber particles,

b) treating the rubber particles as prepared under a) with a halogenating agent to provide a slurry of halogenated, filler-containing, rubber particles having an average halogen content of at least 0.1 %m (mass per cent), calculated on rubber, and

c) isolating and drying the halogenated, filler-containing, rubber particles as prepared under b).

The aqueous coagulating medium employed in the first step of the process of the present invention will generally comprise an aqueous solution of a water-soluble coagulant. Such suitable coagulants include water-soluble mineral and organic acids such as hydrochloric acid, sulfuric acid, formic acid and acetic acid, as well as water-soluble salts, derived from mineral acids, such as sodium chloride, calcium chloride, zinc sulfate and aluminium sulfate. Preferred aqueous coagulating media in the process of the present invention are those based on combinations of an acid and a salt. Especially preferred is an aqueous coagulating medium based on sulfuric acid and aluminium sulfate.

The amount of acid used should be sufficient to provide an aqueous solution having a pH in the hereinbefore mentioned range of from 0-4.5. Preferably the pH of the coagulating medium is in the range of from 1-3.5. The salt content of the aqueous coagulating medium will generally be in the range of from 0.2-1 %m.

The manner in which the aqueous coagulating medium is agitated should be such that upon addition of the rubber latex and filler to said coagulating medium, sufficient shear is exerted on the added matter for it to be dispersed in the coagulating medium in the form of discrete particles, i.e. with the formation of an aqueous slurry of filler-containing rubber particles. Stirring is a very suitable method for agitating the coagulating medium.

In addition to the rate of agitation, the formation of the discrete rubber particles is furthermore influenced by a number of process variables such as the rate of addition of latex and filler, the pH of the coagulating medium and the nature of the latex.

As implicitly stated hereinbefore the latex and filler are added to the coagulating medium over a period of time, which addition may e.g. be a linear or a staged addition. Should the addition of latex and filler to a given coagulating medium, not result in the desired particle formation, then this may be remedied e.g. by one or more of the following changes in the process conditions:

a) increasing the rate of agitation,

b) reducing the rate of addition,

c) reducing the rubber content of the latex, and

d) increasing the pH of the coagulating medium.

In general the formation of the discrete particles may be accomplished by a large number of combinations of the process variables mentioned hereinbefore. As regards the individual variables, the manner and rate of agitation is of course equipment dependent and can thus not be varied unlimited. Increasing the rate of agitation above the minimum conditions required for the formation of the discrete rubber particles, will generally result in a decrease in the average particle size. On the other hand increasing the addition rate of latex and filler, within the range wherein rubber particles may still be formed, will result in an increase of the average particle size.

For a given rubber latex the ease of dispersion of the latex in the coagulating medium is related to the rubber content of said latex. Generally the rubber content of the rubber latices which may be employed in the process of the present invention will be in the range of from 5-25 %m. Hence, when as a result of a too high rubber content, the formation of discrete rubber particles is not possible or only possible under rather extreme conditions, such as very low addition rates of the latex and/or extremely high rate of agitation, lowering the rubber content of the latex, i.e. diluting the rubber latex, will generally have a beneficial effect on the ease of dispersion. Finally the formation of discrete rubber particles is also influenced by the pH of the coagulating medium; a low pH resulting in a fast coagulation, whereas a relatively high pH will provide a low rate of coagulation, thereby promoting the dispersion of latex and filler.

Although in the process of the present invention the rubber latex and the filler may be added together to the aqueous coagulating medium, e.g. by mixing the rubber latex with the filler or preferably with an aqueous dispersion thereof, there is a preference for a separate addition of rubber latex and filler. According to a preferred embodiment of the present invention the latex and filler may be introduced into the coagulating medium via a continuous or staged addition procedure, wherein the addition rates of each of the compounds to be added may be the same or different. Especially preferred is a procedure whereby a part of the filler is first dispersed in the coagulating medium prior to commencing the addition of the latex and the remainder of the filler.

In the context of the present invention the term filler-containing rubber particles should be interpreted to also cover such particles containing more than one filler as defined hereinafter. Hence the term filler should also be interpreted to refer to more than one filler or mixtures of fillers.

The procedure whereby rubber latex and filler are added separately is very convenient when the filler-containing rubber particles are based on more than one type of filler, and is especially useful in the preparation of such particles wherein e.g. the nature and/or distribution of the filler or fillers in the interior part of the particles should be different to that of the outer parts of said particles.

In general the filler will be employed in an amount in the range of from 0.1-100 pbw per 100 pbw of rubber, preferably the filler will be used in a range of from 20-70 pbw per 100 pbw of rubber.

The amount of rubber latex and filler which may conveniently be added to the aqueous coagulating medium is not critical and may vary over wide ranges. Preferably the volume of the added matter will comprise from 70-90 %v (volume per cent) of the end volume, i.e. the combined volume of the aqueous coagulating medium and the added matter.

During the addition of latex and filler to the coagulating medium it is preferred for the pH of the coagulating medium to remain more or less constant. Should however the pH increase in the course of the latex and filler addition, then this may be counteracted e.g. by one or more additions of acid.

The rubber latices which may conveniently be employed in the process of the present invention include latices such as those based on styrene-butadiene rubber, styrene-isoprene rubber, styrene-piperylene rubber, polybutadiene rubber, polyisoprene rubber, butadiene-acrylonitrile rubber, as well as the corresponding rubbers based on substituted vinyl aromatic monomers. Latices based on oil-extended rubbers may also be employed. Styrene-butadiene rubber based latices are preferred.

In the context of the present invention the term filler does not only refer to solid, inert, inorganic fillers such as those generally used in rubber compounding, but is also considered to include other, solid, inert,

3

water-soluble compounds which are commonly used in the preparation of rubber compounds. Suitable fillers include carbon black, silica based fillers such as clay-type fillers, fatty acids, carboxylates based on said fatty acids such as sodium and zinc stearate, antioxidants, accelerators, vulcanizing agents and the like.

Upon completion of the latex and filler addition and the dispersion thereof in the aqueous coagulating medium, the filler-containing rubber particles are treated with a halogenating agent to decrease possible surface tack. This treatment may be accomplished by the addition of e.g. an aqueous $Cl_2$ or $Br_2$ solution to the slurry. Preferred however, is the addition of an aqueous solution of compounds such as alkali metal and alkaline earth metal hypochlorites and hypobromites. Suitable such compounds include $NaOCl$, $KOCl$, $NaOBr$, $KOBr$, $Ca(OCl)_2$ and $Ca(OBr)_2$, which compounds will provide the necessary corresponding halogen in situ as a result of the reaction with acid. $NaOCl$ is a preferred halogenating agent. With this embodiment it is preferred that the pH of the aqueous slurry is not higher than about 1. Should the pH of the aqueous slurry be higher than the preferred value, then it may conveniently be adjusted by the addition of acid. The amount of halogenating agent to be added should be sufficient to provide the rubber particles with an average halogen content of at least 0.1 %m, preferably the average halogen content is in the range of from 0.5-2.5 %m. Conveniently the halogenation of the rubber particles may be conducted at a temperature in the range of from 10-40 °C, although lower and higher temperatures are not excluded.

The halogenated rubber particles may be isolated from the aqueous medium, e.g. by filtration and subsequently washed with water and dried.

The process of the present invention as described hereinbefore not only enables filler-containing rubber particles to be prepared which vary in size, but also offers the possibility to prepare filler-containing rubber particles which vary in shape, i.e. from nearly spherical particles to flake shaped particles. It is believed that many of the process variables such as manner and rate of agitation, pH of the coagulating medium, nature of the rubber latex, rubber/filler ratio, will all have an effect on the ultimate particle shape. For a given system a very high shear was found to result in more or less flake-shaped particles, whereas conditions with less shear tended to favour the formation of more or less sphere-shaped filler-containing particles. Such more or less sphere-shaped particles will no doubt be advantageous as regards the ease of handling.

The invention will be further illustrated by the following examples for which the following information is provided:

The rubber latices employed were taken, as intermediate products from the production of two commercial grades of styrene-butadiene rubber, both having an average styrene content in the range of from 22.5-24.5 %m, i.e. CARIFLEX (trade name) 1509 and CARIFLEX 1712, the latter rubber being an oil extended rubber containing 37.5 pbw of a highly aromatic extender oil per 100 pbw of rubber. Both latices had a rubber content of 21.3 %m.

The carbon black filler used in the examples was an ASTM HAF N339 type carbon black.

Testing of storage stability: The filler-containing rubber particles were stored in glass jars for 12 months. With one example the particles produced were also stored under a load, which load corresponded with a storage height of 1 m.

Particle size (weight fractions) was determined via sieving.

Examples I and II

Preparation of filler-containing rubber particles employing a styrene-butadiene rubber latex in combination with carbon black and sodium stearate.

Coagulating medium:

1500 g of water was acidified with 98 %m $H_2SO_4$ to arrive at a pH = 2.5, which was followed by addition of 12 g $Al_2(SO_4)_3 18H_2O$.

Particle preparation

To the coagulating medium mentioned hereinbefore, which was contained in a 10 l reactor fitted with 2 baffles and equipped with a 6-bladed Rushton Turbine stirrer having a dr/dT( = ratio diameter stirrer/diameter reactor) = 0.4, 150 g of carbon black was added and dispersed therein with stirring. Subsequently latex (type 1509) and carbon black were added stepwise and separately to the continuously stirred coagulating medium. The carbon black addition was completed when all but 0.5 l of latex had been added. Cocurrently with the last 0,5 l of latex , 12 g sodium stearate was added, separately and stepwise. During the coagulation the pH of the coagulating medium was kept at 2.5 with the intermittent addition of a few ml of

98 %m $H_2SO_4$.

Upon completion of the coagulation step, the pH was lowered to 1 by the addition of further $H_2SO_4$. Subsequently 150 g of a 10 %m aqueous sodium hypochlorite solution was stirred into the acidified slurry and stirring was maintained for 5 minutes.

Finally the rubber particles were isolated via filtration, washed with water until neutral and dried. The initial drying was conducted by placing the rubber particles on absorbent paper during a few hours, which was followed by a final drying in a fluidized bed for about 1 hour at 20 °C.

The process details and particle data are given in Table 1.

## Table 1

| Example | | I | II |
|---|---|---|---|
| Coagulating medium, | ml | 1500 | 1500 |
| pH | | 2.5 | 2.5 |
| $Al_2(SO_4)_3 \cdot 18H_2O$, | g | 12 | 12 |
| Stirrer speed, | rpm | 1500 | 1250 |
| Carbon black predispersed, | g | 150 | 150 |
| Latex (1509), | l | 5 | 5.5 |
| Carbon black added, | g | 390 | 550 |
| Sodium stearate, | g | 12 | 12 |
| Latex addition time, | min | approx. 60 | approx. 90 |
| Sodium hypochlorite solution, | g | 150 | 150 |
| Particle shape | | nearly spherical | |
| Particle size, | | | |
| < 0.5 mm | %m | 3.9 | 4.1 |
| 0.5 - 1.7 mm | %m | 73.2 | 41.5 |
| > 1.7 mm | %m | 22.9 | 54.4 |
| Storage stability | | Samples from both examples remained free-flowing when stored for 12 months at 20 °C | |

Examples III-VII

Preparation of filler-containing rubber particles employing a latex, based on an oil-extended rubber, in combination with carbon black and sodium stearate.

The procedure as described in Examples I and II was repeated but on a smaller scale, i.e. employing a 2 l reactor fitted with 4 baffles and equipped with a similar stirrer as in Examples I and II, and 400 ml of coagulating medium. With these experiments the pH of the coagulating medium was varied from 1.5-3.0, the stirrer speed from 1500-2000 rpm while the latex addition was varied from 15-120 minutes. The latex was based on an oil-extended rubber (1712). The sodium stearate was added discontinuously with the final 50 ml of latex. Process details and product data are given in Table 2.

5

Table 2

| Example | | III | IV | V | VI | VII |
|---|---|---|---|---|---|---|
| Coagulating medium, | ml | 400 | 400 | 400 | 400 | 400 |
| pH | | 1.5 | 2.5 | 2.5 | 3.0 | 3.0 |
| $Al_2(SO_4)_3, 18H_2O$ | g | 2 | 2 | 2 | 2 | 2 |
| Stirrer speed, | rpm | 2000 | 1500 | 1750 | 1500 | 2000 |
| Carbon black predispersed, | g | 25 | 25 | 25 | 25 | 25 |
| Latex (1712), | ml | 950 | 950 | 950 | 950 | 950 |
| Carbon black added, | g | 40 | 40 | 40 | 40 | 40 |
| Sodium stearate, | g | 2 | 2 | 2 | 2 | 2 |
| Latex addition time, | min | 15 | 45 | 30 | 120 | 30 |
| Sodium hypochlorite solution, | g | 30 | 30 | 30 | 30 | 30 |
| Particle shape*, | | f | ns | f + fs | ns | fs |
| Particle size | | | | | | |
| < 0.5 mm | %m | 3.0 | 4.8 | 7.9 | 4.3 | 1.0 |
| 0.5-1.7 mm | %m | 34.4 | 30.2 | 39.5 | 60.1 | 94.1 |
| > 1.7 mm | %m | 62.6 | 65.0 | 52.6 | 35.6 | 4.9 |

\* f:flakes, fs: flattened spheres, ns: nearly spherical.

Samples from the particles as prepared in Examples IV-VII remained free-flowing after storage for 12 months at 20 °C. A sample from Example IV was stored under a load, corresponding with a storage height of about 0.75 m, for one day at 20 °C. After removing the load the particles became free-flowing again when shaken.

**Claims**

1. A process for the preparation of tack-free, free-flowing, filler-containing, rubber particles which comprises:

   a) the addition of a rubber latex and a solid filler to an agitated aqueous coagulating medium, having a pH in the range of from 0-4.5, and at such a rate as to provide an aqueous slurry of filler-containing, rubber particles,

   b) treating the rubber particles as prepared under a) with a halogenating agent to provide a slurry of halogenated, filler-containing, rubber particles having an average halogen content of at least 0.1 %m, calculated on rubber, and

   c) isolating and drying the halogenated, filler-containing, rubber particles as prepared under b).

2. A process as claimed in claim 1, wherein the coagulating medium comprises an aqueous solution of a mineral or organic acid and a salt derived from a mineral acid.

3. A process as claimed in claim 1 or 2, wherein the pH is in the range of from 1-3.5.

4. A process as claimed in claim 2 or 3, wherein the salt content of the coagulating medium is in the range of from 0.2-1 %m.

5. A process as claimed in any one of claims 2-4, wherein the coagulating medium is based on a combination of sulfuric acid and aluminium sulfate.

6. A process as claimed in any one of claims 1-5, wherein the rubber latex and filler are mixed prior to being added to the coagulating medium.

7. A process as claimed in claim 6, wherein the rubber latex is mixed with an aqueous dispersion of said filler.

8. A process as claimed in any one of claims 1-5, wherein the rubber latex and filler are added separately to the aqueous coagulating medium.

9. A process as claimed in claim 8, wherein part of the filler is predispersed in the coagulating medium, prior to commencing the addition of the rubber latex and the remainder of the filler.

10. A process as claimed in any one of claims 1-9, wherein the addition of rubber latex and filler is a continuous or a staged addition.

11. A process as claimed in any one of claims 1-10, wherein more than one filler is used.

12. A process as claimed in any one of claims 1-11, wherein the rubber content of the latex is in the range of from 5-25 %m.

13. A process as claimed in any one of claims 1-12, wherein the rubber latex is based on an oil extended rubber.

14. A process as claimed in any one of claims 1-13, wherein the rubber latex is based on a styrene-butadiene rubber.

15. A process as claimed is any one of claims 1-14, wherein the filler is employed in an amount of from 0.1-100 pbw per 100 pbw of rubber.

16. A process as claimed in claim 15, wherein the filler is employed in an amount of 20-70 pbw.

17. A process as claimed in any one of claims 1-16, wherein the halogenating agent is selected from the group comprising alkali metal and alkaline earth metal hypochlorites and hypobromites.

18. A process as claimed in claim 17, wherein the alkali metal hypochlorite is sodium hypochlorite.

19. A process as claimed in any one of claims 1-18, wherein the average halogen content of the filler-containing rubber particles is in the range of from 0.5-2.5 %m calculated on rubber.

**Patentansprüche**

1. Ein Verfahren zur Herstellung von klebfreien, rieselfähigen, Füllstoff enthaltenden Kautschukteilchen, das umfaßt

(a) die Zugabe eines Kautschuklatex und eines festen Füllstoffs zu einem gerührten, wässrigen, koagulierenden Medium mit einem pH-Bereich von 0 - 4,5 und bei einer solchen Geschwindigkeit, um eine wässrige Aufschlämmung von Füllstoff enthaltenden Kautschukteilchen zur Verfügung zu stellen,

(b) Behandeln der wie unter (a) hergestellten Kautschukteilchen mit einem Halogenierungsmittel, um eine Aufschlämmung von halogenierten, Füllstoff enthaltenden Kautschukteilchen mit einem durchschnittlichen Halogengehalt von mindestens 0,1 Massenprozent, berechnet auf Kautschuk, zur Verfügung zu stellen, und

(c) Isolieren und Trocknen der wie unter (b) hergestellten halogenierten, Füllstoff enthaltenden Kautschukteilchen.

2. Ein Verfahren wie in Anspruch 1 beansprucht, wobei das koagulierende Medium eine wässrige Lösung einer Mineralsäure oder einer organischen Säure und ein sich von einer Mineralsäure ableitendes Salz umfaßt.

3. Ein Verfahren wie in Anspruch 1 oder 2 beansprucht, wobei der pH-Wert im Bereich von 1 - 3,5 liegt.

4. Ein Verfahren wie in Anspruch 2 oder 3 beansprucht, wobei der Salzgehalt in dem koagulierenden Mittel im Bereich von 0,2 bis 1 Massenprozent liegt.

5. Ein Verfahren wie in irgendeinem der Ansprüche 2 bis 4 beansprucht, wobei das koagulierende Mittel auf einer Kombination von Schwefelsäure und Aluminiumsulfat basiert.

6. Ein Verfahren wie in irgendeinem der Ansprüche 1 bis 5 beansprucht, wobei der Kautschuklatex und der Füllstoff vor dem Zugeben zu dem koagulierenden Medium gemischt werden.

7. Ein Verfahren wie in Anspruch 6 beansprucht, wobei der Kautschuklatex mit einer wässrigen Dispersion des besagten Füllstoffs vermischt wird.

8. Ein Verfahren wie in irgendeinem der Ansprüche 1 bis 5 beansprucht, wobei der Kautschuklatex und der Füllstoff getrennt zu dem wässrigen koagulierenden Medium zugefügt werden.

9. Ein Verfahren wie in Anspruch 8 beansprucht, wobei ein Teil des Füllstoffs in dem koagulierenden Medium vordispergiert wird, bevor die Zugabe des Kautschuklatex und des restlichen Füllstoffs beginnt.

10. Ein Verfahren wie in irgendeinem der Ansprüche 1 bis 9 beansprucht, wobei die Zugabe des Kautschuklatex und des Füllstoffs eine kontinuierliche oder eine stufenweise Zugabe ist.

11. Ein Verfahren wie in irgendeinem der Ansprüche 1 bis 10 beansprucht, wobei mehr als ein Füllstoff verwendet wird.

12. Ein Verfahren wie in irgendeinem der Ansprüche 1 bis 11 beansprucht, wobei der Kautschukgehalt des Latex im Bereich von 5 bis 25 Massenprozent liegt.

13. Ein Verfahren wie in irgendeinem der Ansprüche 1 bis 12 beansprucht, wobei der Kautschuklatex auf einem ölgestreckten Kautschuk basiert.

14. Ein Verfahren wie in irgendeinem der Ansprüche 1 bis 13 beansprucht, wobei der Kautschuklatex auf einem Styrol/Butadien-Kautschuk basiert.

15. Ein Verfahren wie in irgendeinem der Ansprüche 1 bis 14 beansprucht, wobei der Füllstoff in einer Menge von 0,1 - 100 Gewichtsteilen je 100 Gewichtsteile Kautschuk angewendet wird.

16. Ein Verfahren wie in Anspruch 15 beansprucht, wobei der Füllstoff in einer Menge von 20 - 70 Gewichtsteilen angewendet wird.

17. Ein Verfahren wir in irgendeinem der Ansprüche 1 bis 16 beansprucht, wobei das Halogenierungsmittel aus der Gruppe, umfassend Alkalimetall- und Erdalkalimetall-hypochlorite und -hypobromite ausgewählt ist.

18. Ein Verfahren wie in Anspruch 17 beansprucht, wobei das Alkalimetall-hypochlorit Natriumhypochlorit ist.

19. Ein Verfahren wie in irgendeinem der Ansprüche 1 bis 18 beansprucht, wobei der durchschnittliche Halogengehalt der Füllstoff enthaltenden Kautschukteilchen im Bereich von 0,5 - 2,5 Massenprozent, berechnet auf Kautschuk, liegt.

**Revendications**

1. Un procédé pour la préparation de particules de caoutchouc renfermant une charge, exempte d'adhésivité et fluide, qui comporte

    a) l'addition d'un latex de caoutchouc et d'une charge solide à un milieu coagulant aqueux, sous agitation, présentant un pH dans la gamme de 0 à 4,5, et selon un débit tel que l'on obtienne une suspension aqueuse de particules de caoutchouc renfermant une charge,

    b) le traitement des particules de caoutchouc tel que préparé au point a) avec un agent d'halogénation afin d'obtenir une suspension de particules de caoutchouc halogéné, renfermant une charge, présentant une teneur moyenne en halogène d'au moins 0,1 %m (masse en pourcent), en calculant à partir du caoutchouc et,

    c) l'isolation et le séchage des particules de caoutchouc halogéné, renfermant une charge, tels que préparés au point b).

2. Un procédé tel que revendiqué dans la revendication 1, dans lequel le milieu de coagulation comporte une solution aqueuse d'un acide minéral ou organique et un sel dérivé d'un acide minéral.

3. Un procédé tel que revendiqué dans la revendication 1 ou 2, dans lequel le pH se situe dans la gamme de 1 à 3,5.

4. Un procédé tel que revendiqué dans la revendication 2 ou 3, dans lequel la teneur en sel du milieu de coagulation se situe dans la gamme de 0,2 à 1%m.

5. Un procédé tel que revendiqué dans l'une quelconque des revendications 2 à 4, dans lequel le milieu de coagulation est basé sur une combinaison d'acide sulfurique et de sulfate d'aluminium.

6. Un procédé tel que revendiqué dans l'une quelconque des revendications 1 à 5, dans lequel le latex de caoutchouc et la charge sont mélangés avant d'être ajoutés au milieu de coagulation.

7. Un procédé tel que revendiqué dans la revendication 6, dans lequel le latex de caoutchouc est mélangé avec une dispersion aqueuse de ladite charge.

8. Un procédé tel que revendiqué dans l'une quelconque des revendications 1 à 5, dans lequel le latex de caoutchouc et la charge sont ajoutés séparément au milieu de coagulation aqueux.

9. Un procédé tel que revendiqué par la revendication 8, dans lequel une partie de la charge est prédispersée dans le milieu de coagulation, avant de commencer l'addition du latex de caoutchouc et du reste de la charge.

10. Un procédé tel que revendiqué dans l'une quelconque des revendications 1 à 9, dans lequel l'addition de latex de caoutchouc et de charge est une addition en continu ou bien une addition par étapes.

11. Un procédé tel que revendiqué dans l'une quelconque des revendications 1 à 10, dans lequel on utilise plus d'une charge.

12. Un procédé tel que revendiqué dans l'une quelconque des revendications 1 à 11 dans lequel la teneur en caoutchouc du latex se situe dans la gamme de 5 à 25%m.

13. Un procédé tel que revendiqué dans l'une quelconque des revendications 1 à 12, dans lequel le latex de caoutchouc est à base d'un caoutchouc étendu à l'huile.

14. Un procédé tel que revendiqué dans l'une quelconque des revendications 1 à 13, dans lequel le latex de caoutchouc est à base d'un caoutchouc de styrène-butadiène.

15. Un procédé tel que revendiqué dans l'une quelconque des revendications 1 à 14, dans lequel la charge est utilisée en une quantité de 0,01 à 100 parties en poids pour 100 parties en poids de caoutchouc.

**16.** Un procédé tel que revendiqué dans la revendication 15, dans lequel la charge est utilisée en une quantité de 20 à 70 pourcent en poids.

**17.** Un procédé tel que revendiqué dans l'une quelconque des revendications 1 à 16, dans lequel l'agent d'halogénation est choisi dans le groupe constitué des hypochlorites et des hypobromites de métaux alcalins et de métaux alcalino-terreux.

**18.** Un procédé tel que revendiqué dans la revendication 17, dans lequel l'hypochlorite de métal alcalin est l'hypochlorite de sodium.

**19.** Un procédé tel que revendiqué dans l'une quelconque des revendications 1 à 18, dans lequel la teneur moyenne en halogène des particules de caoutchouc renfermant une charge se situe dans la gamme de 0,5 à 2,5%m, en calculant à partir du caoutchouc.